# EUROPEAN PATENT SPECIFICATION

(11) **EP 0 885 253 B1**
(45) Date of publication and mention of the grant of the patent: **26.04.2000**
(21) Application number: 97908574.3
(22) Date of filing: 07.03.1997
(51) Int. Cl.: C08G 81/02, C08F 2/38

(54) **PROCESS FOR THE PREPARATION OF A HIGHLY BRANCHED POLYMER**
VERFAHREN ZUR HERSTELLUNG EINES HOCHVERZWEIGTEN POLYMERS
PROCEDE DE PREPARATION D'UN POLYMERE TRES RAMIFIE

(30) Priority: 08.03.1996 NL 1002554
(43) Date of publication of application: 23.12.1998
(73) Proprietor: DSM N.V., 6411 TE Heerlen (NL)
(72) Inventor: KONING, Cornelis, Eme, NL-6436 EL Schinnen (NL); MOELLER, Martin, D-89081 Ulm (DE); DE BRABANDER-VAN DEN BERG, Ellen, Marleen, Monique, NL-6438 BE Schinnen (NL)
(86) International application number: NL9700113
(87) International publication number: WO9732919

(56) References cited:
- EP-A- 0 541 045
- US-A- 5 136 014
- DATABASE WPI Section Ch, Week 8719 Derwent Publications Ltd., London, GB; Class A25, AN 87-133427 XP002022214 & JP 62 074 915 A (JAPAN SYNTHETIC RUBBER) , 6 April 1987
- DATABASE WPI Section Ch, Week 8620 Derwent Publications Ltd., London, GB; Class A13, AN 86-127701 XP002022215 & JP 61 064 757 A (TOA GOSEI CHEM IND LTD) , 3 April 1986

## Description

The invention relates to a process for the preparation of a highly branched polymer.

Such a process is known from EP-A-473,088. In the known process a first, living polymer consisting of monomer units B is prepared in the first step.

In the second step the first polymer thus obtained is combined with a second polymer consisting of monomer units A, the monomer units A being reactive with respect to the terminal group of the first polymer, so that the first polymer is grafted onto the second polymer.

In the third step the monomer units B are converted into monomer units A.

In a fourth step an amount of the first polymer is again added, which is grafted onto the polymer obtained in the third step.
Then the third and fourth steps are repeated.

Such a process is very laborious and time-consuming.

The invention aims to provide a method that does not present the aforementioned drawbacks.

This is achieved in that in the process of the invention the terminal group X of a precursor polymer which contains at least 1 mol % monomer units Y and of which at least a proportion of whose chains each contain one terminal group X that is reactive with the monomer units Y, are reacted with the monomer units Y, the proportion of the chains containing two terminal groups X being less than 5 mol % so that no gel can be formed in the reaction between the monomer units y and the terminal groups X.
The polymer which contains monomer units Y and of which at least a proportion of whose chains each contains one terminal group X that is reactive with the monomer units Y, will hereinafter be called the precursor polymer.

With the process according to the invention a highly branched polymer is prepared in only one step, whereas very many steps are required for that purpose with the known process.

A further advantage of the process according to the invention is that it is possible to prepare a very large number of different highly branched polymers because the only requirement is that the terminal group X must be reactive with the monomer units Y, whereas only a very small number of different highly branched polymers can be prepared with the known process. This is due to the fact that the latter process is based on the use as a starting material of a living polymer consisting of monomer units B, whose terminal group must be reactive with a polymer consisting of monomer units A, and there is the additional requirement that it must be possible to convert the monomer units B into the monomer units A.

It is important that the proportion of the chains containing two terminal groups in the precursor polymer is only small, because then the chains will form a highly branched polymer. If a large proportion of the chains contain two terminal groups X, a gel will be formed instead of a highly branched polymer. Of course it is possible for a minor proportion of chains to contain two terminal groups X, but only for less than 5 mol.%, preferably less than 3 mol.%, more preferably less than 1 mol.% of the chains, because then a highly branched polymer will still be formed.

It is possible that only a proportion of the chains of the precursor polymer contains the terminal group X. The larger the proportion of the chains containing a terminal group X, the higher the average molecular weight of the highly branched polymer will be. Preferably at least 70 mol.% , more preferably at least 90 mol.%, of the chains of the precursor polymer contain a terminal group X.

The higher the concentration of monomer units Y in the precursor polymer, the higher the rate of the reaction of the monomer units Y with the terminal groups X. In the case of a low concentration of Y monomer units, the highly branched polymer may be formed to an insufficient extent, in particular if the degree of polymerisation of the precursor polymer is low, because too many chains of the precursor polymer will contain no monomer units Y whatsoever. Therefore, the precursor polymer contains at least 1 mol.%, preferably at least 5 mol.%, more preferably at least 10 mol.%, monomer units Y.

Examples of terminal groups X are a carboxyl group, amine group, silyl group, thiol group, hydroxyl group, anhydride group, epoxide group, isocyanate group or oxazoline group.

The terminal groups can for example be incorporated in the precursor polymer by polymerising the precursor polymer in the presence of a chain transfer agent containing group X. The chain transfer agent will stop the polymerisation of the chain and subsequently inimate the formation of a new chain, of which new chain the chain transfer agent will be the last unit of one end of the chain. This will automatically result in the formation of chains containing only one terminal group X.

It is also possible for the initiator of the polymerisation of the precursor polymer to contain the group X. If the polymerisation should involve degradative chain transfer, the chains will contain a terminal group X. It is also possible to stop the polymerisation of a living polymer by adding a chain terminating agent containing the terminal group X to the polymerisation mixture.

If X is a carboxyl group (-COOH), then the following can for example be used as the monomer units Y: glycidyl esters of an acrylate, for example glycidyl methacrylate, a vinyl oxazoline, for example isopropenyl oxazoline, a carbodiimide, a vinyl benzylisocyanate, for example isopropenyl benzylisocyanate.

If X is an amine group (-NH₂), then the following can for example be used as the monomer units Y:
an α-β unsaturated dicarboxylic anhydride, for example maleic anhydride, monomer units containing a dicarboxylic anhydride group or an isocyanate group that is present in the polymer as a side-group, an epoxide, a carbodiimide, an acrylate ester, for example methyl methacrylate.

If X is a silyl group, then for example diene monomer units can be used as the monomer units Y, for example 1,3-butadiene.

If X is a thiol group (-SH), then for example glycidyl esters of an acrylate can be used as the monomer units Y, for example glycidyl methacrylate.

If X is a hydroxyl group, then the following can for example be used as the monomer units Y: monomer units containing an isocyanate group that is present in the polymer as a side-group, for example {1-methyl-1-[3-(1-methylethenyl)-phenyl]ethyl}-carbamic acid 1,1-dimethylethyl ester, an α-β unsaturated dicarboxylic anhydride, for example maleic anhydride, glycidyl esters of an acrylate, for example glycidyl methacrylate.

Examples of a polymer containing monomer units Y and whose chains each contain one terminal group X are acid-terminated poly(styrene-co-glycidyl methacrylate), acid-terminated poly(styrene-co-acrylonitrile-co-isopropenyloxazoline), acid-terminated poly(styrene-co-{1-methyl-1-[3-(1-methylethenyl)-phenyl]ethyl}carbamic acid 1,1-dimethylethyl ester), amine-terminated poly(styrene-co-maleic anhydride), amine-terminated poly(styrene-co-methyl methacrylate), silyl-terminated poly(1,4-butadiene-co-1,2-butadiene), thiol-terminated poly(styrene-co-acrylonitrile-co-glycidyl methacrylate), hydroxyl-terminated poly(methyl methacrylate-co-{1-methyl-1-[3-(1-methylethenyl)-phenyl]ethyl}carbamic acid 1,1-dimethylethyl ester), amine-terminated ethylene-propylene copolymer grafted with maleic anhydride, hydroxyl-terminated ethylene-propylene copolymer grafted with {1-methyl-1-[3-(1-methylethenyl)-phenyl]ethyl}carbamic acid 1,1-dimethylethyl ester, epoxy-terminated ethylene-propylene copolymer grafted with acrylic acid or methacrylic acid, hydroxyl-terminated or amine-terminated poly(styrene-co-N-phenylmaleimide-co-maleic anhydride), phenol-terminated poly(styrene-co-acrylonitrile-co-glycidyl methacrylate).
It is for example also possible to use amine-terminated polymethyl methacrylate as the precursor polymer. Preferably the precursor polymer is directly formed through polymerisation of monomers Y, optionally in the presence of other monomers copolymerisable therewith.
It is however also possible for a polymer to be prepared in the first step through polymerisation of monomers Y', after which the monomer units Y' are entirely or partly converted into monomer units Y. The monomer units Y' may for example be acrylic acid monomer units that can for example be converted into glycidyl acrylate.

The degree of polymerisation of the precursor polymer may be varied within wide limits. The degree of polymerisation may be for example 5-2000. If the precursor polymer has a high degree of polymerisation, preferably a degree of polymerisation of 1000-2000, a highly branched polymer with a very high molecular weight can be obtained after a short reaction time. Such a highly branched polymer has good mechanical properties and in spite of its high molecular weight it has a reasonably low viscosity.
If the precursor polymer has a low degree of polymerisation, preferably a degree of polymerisation of 10 - 100, the precursor polymer will have a very low viscosity, and it will be possible for example to introduce the polymer into a mould in a simple manner, under low pressure, after which the terminal groups X can be caused to react in the mould with the monomer units Y, so that the highly branched polymer can form. It is furthermore possible to wet fibres, for example glass fibres and carbon fibres, with the low-viscosity precursor polymer and then cause the terminal groups X to react with the monomer units Y. This way a thermoplastic composite can be prepared in a simple fashion, because the wetting of the fibres by the low-viscosity precursor polymer is a quick and simple process, which nevertheless ultimately results in a composite with a high-molecular weight matrix.

The molecular weight of the highly branched polymer is dependent on the molecular weight of the precursor polymer and the number of chains of the precursor polymer contained by the highly branched polymer. The number of chains of the precursor polymer contained by the highly branched polymer increases as the reaction time of the terminal groups X with the monomer units Y increases. It is possible to catalyse the reaction between the terminal groups X and the monomer units Y. It is also possible to stop the reaction between the terminal groups X and the monomer units Y at any desired moment by adding a reactant that masks the monomer units Y and/or terminal groups X that have not yet reacted.

The reaction between the terminal groups X and the monomer units Y is preferably continued until the chains of the highly branched polymer contain at least on average 3 chains, more preferably on average at least 5 chains, even more preferably on average 10 chains of the precursor polymer.

### Example I

14 mg of 2,2-azo-bis-isobutyronitrile (IABN), 0.8 ml of methylacrylate, 9.3 ml of styrene and 2-amino-ethanethiol hydrochloride (AET.HCl) were dosed into a 25-ml flask. The AET.HCl : styrene weight ratio was 0.05 : 1. (AET.HCl is an amine-functionalised chain transfer agent that as such serves to provide the copolymer to be formed with an amine terminal group).

The mixture was stirred and degassed at room temperature by repeatedly sucking it vacuum and purging it with nitrogen gas.
Then the flask was sealed and placed in an oil bath with a temperature of 60°C for 10 hours.
The styrene-methylacrylate copolymer obtained was then precipitated in a 10-fold excess of methanol. The polymer was removed through filtration, rinsed with methanol and dried under a vacuum at 50°C. The yield was 13.3 wt.%.
The presence of an amine group in the polymer was demonstrated by the fact that a 1% ninhydrin solution in ethanol turned blue and by the presence of an absorption band in the IR spectrum at 3445 cm⁻¹.
Gel Permeation Chromatography (GPC) using polystyrene standards and using toluene as a solvent showed that the number average (Mn) and weight average (Mw) molecular weights were 2885 and 18660 kg/kmol, respectively.
Proton-NMR revealed a methylacrylate monomer unit concentration of 9.5 mol.%.

The precursor polymer thus formed was stirred under a nitrogen atmosphere, at a temperature of 200°C. After reaction times of 180, 240 min. and 300 min. the number average molecular weight was measured. The results are presented in Table 1.

**Table 1**

| Molecular weights of highly branched styrene-methylacrylate copolymer. | | |
|---|---|---|
| reaction time (min.) | Mn (kg/kmol) | Mw (kg/kmol) |
| 0 | 2885 | 18660 |
| 180 | 3810 | 17680 |
| 240 | 6080 | 21650 |
| 300 | 9394 | 29020 |

The increase in the molecular weight demonstrates the formation of the highly branched polymer.

After 300 min. the product was still entirely soluble in toluene. This shows that no cross-linking had taken place.

### Example II

In a first step, ABₓ precursor polymers based on polybutadiene were syntesized as follows. 1,3-Butadiene (20g) was degassed by freeze-thawing and additionally purified by stirring with n-butyllithium (5mL of a 1.4M solution in cyclohexane). After this treatment, the butadiene was condensed into an ampoule. Polymerization was initiated with sec-butyllithium under inert atmosphere at room temperature either in n-hexane-solution (250 mL) or in bulk monomer. By variation of the amount of n-butyllithium relative to the amount of butadiene, the molecular weight of the precursor polymer can be chosen. After 36h the polymerization was stopped by injecting an excess (1.2-1.5 equivalent relative to the added amount of initiator) of chlorodimethylsilane. To complete the termination, the solution was allowed to stir for two hours. The resulting lithiumchloride was filtrated and the excess of dimethylchlorosilane and solvent was removed by distillation. The precursor polymers were colourless, viscous liquids. Non-limiting examples are tabulated in Table 2.

**Table 2**

| Properties of ABx precursor polymers | | | | |
|---|---|---|---|---|
| Sample | no. of 1,2-vinylgroups^{a)} | Mn (g/mole)^{b)} | M_{w}/Mₙ^{b)} | [η] (mL/g)^{c)} |
| 1 | 2 | 1845 | 1.01 | 8.5 |
| 2 | 5 | 2813 | 1.13 | 9.6 |
| 3 | 10 | 6872 | 1.05 | 27.2 |

| | | | | |
|---|---|---|---|---|
| a) Determined by ¹H NMR | | | | |
| b) According to GPC in toluene using linear polyisoprene standards | | | | |
| c) Intrinsic viscosity determined in toluene at 30°C | | | | |

In a second step, the ABx precursor polymers based on polybutadiene were polymerized through a hydrosilylation polymerization. Dry ABₓ precursor polymer (2g) was dissolved in dry n-hexane (25 mL) under an inert atmosphere. To this solution, 25 µL of a 10mg/mL solution of platinum catalyst was added. This platinum catalyst consisted either of a solution of hexachloroplatinic acid in isopropanol (Speier's catalyst) or of a solution of tetramethyldivinyldisiloxane-platinum complex in xylene (Karstedt catalyst). The hydrosilylation polymerization may also be done in bulk precursor polymer. The rate of the reaction was followed by FTIR by measuring the decrease of the SiH absorption at 2125 cm-1. After a total reaction time of 6 days, the polymerization was stopped by precipiting the polymers in methanol followed by drying overnight at 30°C under vacuum. The resulting products were highly viscous, colourless liquids.
Several nonlimiting examples of polymers prepared by hydrosilylation polymerization are tabulated in Table 3.

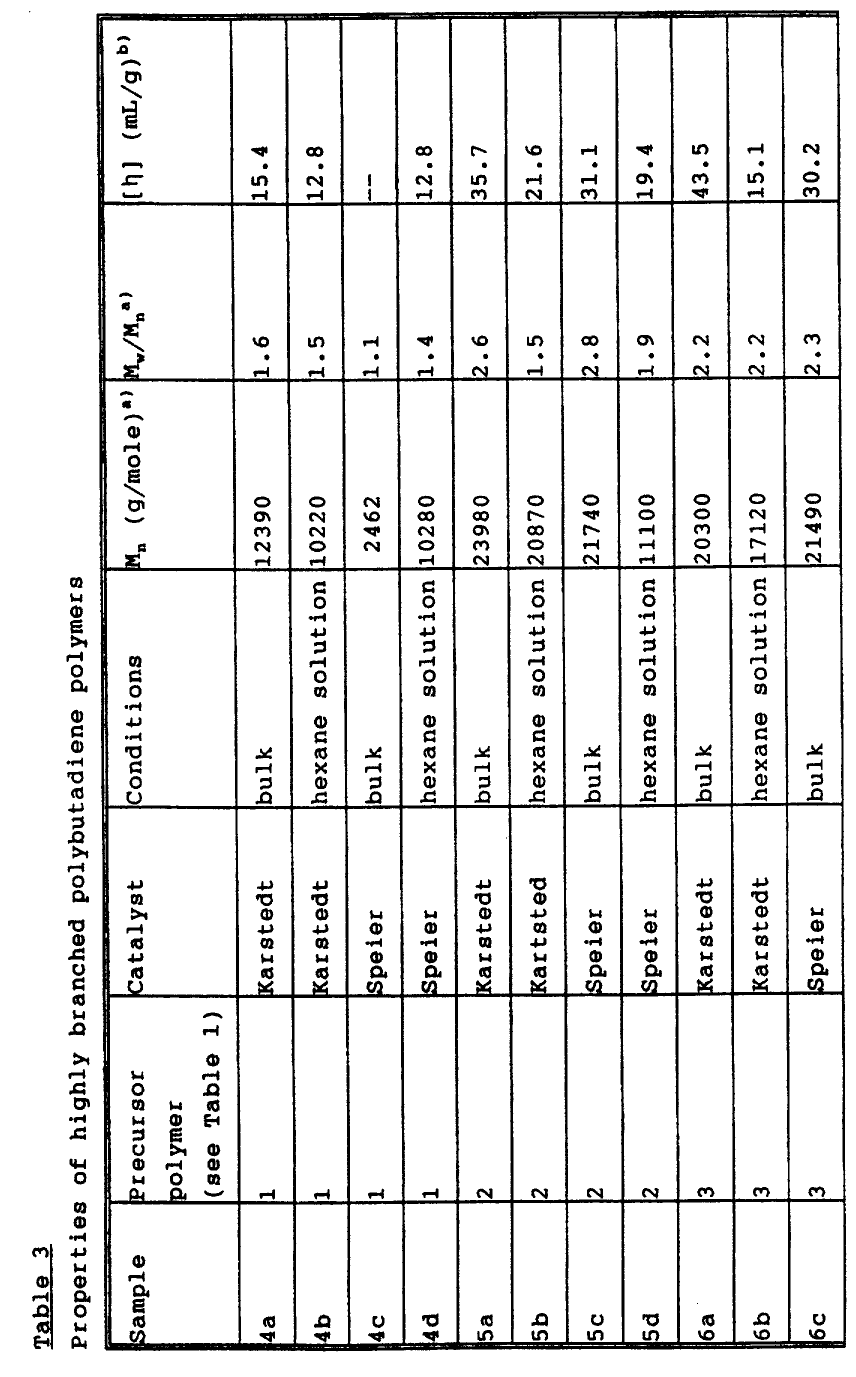

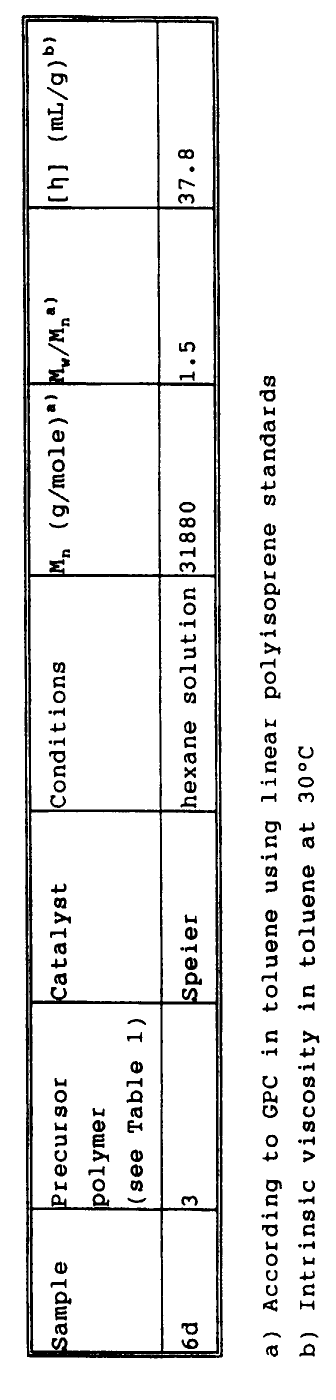

The increase in molecular weight together with the miror increase in the intrinsic viscosity relative to the precrusor polymer demonstrate the formation of the highly branched polymer.

## Claims

1. Process for the preparation of a highly branched polymer, characterised in that the terminal groups X of a precursor polymer, which contains at least 1 mol% monomer units Y and of which at least a proportion of whose chains each contain one terminal group X that is reactive with the monomer units Y, are reacted with the monomer units Y, the proportion of the chains containing two terminal groups X being less than 5 mol% so that no gel can be formed in the reaction between the monomer units Y and the terminal groups X.

2. Process for the preparation of a highly branched polymer according to Claim 1, characterised in that the precursor polymer has a degree of polymerisation of 5-2000.

3. Process for the preparation of a highly branched polymer according to Claim 2, characterised in that the precursor polymer has a degree of polymerisation of 1000 - 2000.

4. Process for the preparation of a highly branched polymer according to Claim 2, characterised in that the precursor polymer has a degree of polymerisation of 10 - 100.

5. Process for the preparation of a highly branched polymer according to any one of Claims 1-4, characterised in that the precursor polymer is introduced into a mould and that subsequently the terminal groups X are caused to react with the monomer units Y.

6. Process for the preparation of a highly branched polymer according to any one of Claims 1-4, characterised in that fibres are wetted with the precursor polymer and that subsequently the terminal groups X are caused to react with the monomer units Y.

7. Process for the preparation of a highly branched polymer according to any one of Claims 1-6, characterised in that the reaction between the terminal groups X and the monomer units Y is continued until the chains of the highly branched polymer contain on average 3 chains of the precursor polymer.

8. Process for the preparation of a highly branched polymer according to any one of Claims 1-6, characterised in that the reaction between the terminal groups X and the monomer units Y is continued until the chains of the highly branched polymer contain on average 5 chains of the precursor polymer.

9. Process for the preparation of a highly branched polymer according to any one of Claims 1-6, characterised in that the reaction between the terminal groups X and the monomer units Y is continued until the chains of the highly branched polymer contain on average 10 chains of the precursor polymer.

## Patentansprüche

1. Verfahren zur Herstellung eines hochverzweigten Polymers, dadurch gekennzeichnet, daß die terminalen Gruppen X eines Vorläuferpolymers, das mindestens 1 Mol-% Monomereinheiten Y enthält und von dem mindestens ein Teil von dessen Ketten jeweils eine terminale Gruppe X enthält, die mit den Monomereinheiten Y reaktiv ist, mit den Monomereinheiten Y umgesetzt werden, wobei der Anteil der Ketten, die zwei terminale Gruppen X enthalten, weniger als 5 Mol-% beträgt, so daß kein Gel in der Umsetzung zwischen den Monomereinheiten Y und den terminalen Gruppen X gebildet werden kann.

2. Verfahren zur Herstellung eines hochverzweigten Polymers nach Anspruch 1, dadurch gekennzeichnet, daß das Vorläuferpolymer einen Polymerisationsgrad von 5 - 2000 aufweist.

3. Verfahren zur Herstellung eines hochverzweigten Polymers nach Anspruch 2, dadurch gekennzeichnet, daß das Vorläuferpolymer einen Polymerisationsgrad von 1000 - 2000 aufweist.

4. Verfahren zur Herstellung eines hochverzweigten Polymers nach Anspruch 2, dadurch gekennzeichnet, daß das Vorläuferpolymer einen Polymerisationsgrad von 10 - 100 aufweist.

5. Verfahren zur Herstellung eines hochverzweigten Polymers nach einem der Ansprüche 1 bis 4, dadurch gekennzeichnet, daß das Vorläuferpolymer in eine Form eingebracht wird und daß nachfolgend bewirkt wird, daß die terminalen Gruppen X mit den Monomereinheiten Y umgesetzt werden.

6. Verfahren zur Herstellung eines hochverzweigten Polymers nach einem der Ansprüche 1 bis 4, dadurch gekennzeichnet, daß Fasern mit dem Vorläuferpolymer benetzt werden und daß nachfolgend bewirkt wird, daß die terminalen Gruppen X mit den Monomereinheiten Y umgesetzt werden.

7. Verfahren zur Herstellung eines hochverzweigten Polymers nach einem der Ansprüche 1 bis 6, dadurch gekennzeichnet, daß die Umsetzung zwischen den terminalen Gruppen X und den Monomereinheiten Y fortgesetzt wird, bis die Ketten des hochverzweigten Polymers durchschnittlich 3 Ketten des Vorläuferpolymers enthalten.

8. Verfahren zur Herstellung eines hochverzweigten Polymers nach einem der Ansprüche 1 bis 6, dadurch gekennzeichnet, daß die Umsetzung zwischen den terminalen Gruppen X und den Monomereinheiten Y fortgesetzt wird, bis die Ketten des hochverzweigten Polymers durchschnittlich 5 Ketten des Vorläuferpolymers enthalten.

9. Verfahren zur Herstellung eines hochverzweigten Polymers nach einem der Ansprüche 1 bis 6, dadurch gekennzeichnet, daß die Umsetzung zwischen den terminalen Gruppen X und den Monomereinheiten Y fortgesetzt wird, bis die Ketten des hochverzweigten Polymers durchschnittlich 10 Ketten des Vorläuferpolymers enthalten.

## Revendications

1. Procédé de préparation d'un polymère hautement ramifié, caractérisé en ce que les groupes terminaux X d'un polymère précurseur qui contient au moins 1 mol% de motifs monomères Y et dont au moins une proportion de ses chaînes contiennent chacune un groupe terminal X qui peut réagir avec les motifs monomères Y, sont mis à réagir avec les motifs monomères Y, la proportion des chaînes contenant deux groupes terminaux X étant inférieure à 5 mol% de sorte qu'aucun gel ne peut se former lors de la réaction entre les motifs monomères Y et les groupes terminaux X.

2. Procédé de préparation d'un polymère hautement ramifié selon la revendication 1, caractérisé en ce que le polymère précurseur a un degré de polymérisation de 5 à 2000.

3. Procédé de préparation d'un polymère hautement ramifié selon la revendication 2, caractérisé en ce que le polymère précurseur a un degré de polymérisation de 1000 à 2000.

4. Procédé de préparation d'un polymère hautement ramifié selon la revendication 2, caractérisé en ce que le polymère précurseur a un degré de polymérisation de 10 à 100.

5. Procédé de préparation d'un polymère hautement ramifié selon l'une quelconque des revendications 1 à 4, caractérisé en ce que le polymère précurseur est introduit dans un moule et qu'ensuite, on provoque la réaction des groupes terminaux X avec les motifs monomères Y.

6. Procédé de préparation d'un polymère hautement ramifié selon l'une quelconque des revendications 1 à 4, caractérisé en ce que des fibres sont mouillées avec le polymère précurseur et qu'ensuite, on provoque la réaction des groupes terminaux X avec les motifs monomères Y.

7. Procédé de préparation d'un polymère hautement ramifié selon l'une quelconque des revendications 1 à 6, caractérisé en ce que l'on continue la réaction entre les groupes terminaux X et les motifs monomères Y jusqu'à ce que les chaînes du polymère hautement ramifié contiennent en moyenne 3 chaînes du polymère précurseur.

8. Procédé de préparation d'un polymère hautement ramifié selon l'une quelconque des revendications 1 à 6, caractérisé en ce que la réaction entre les groupes terminaux X et les motifs monomères Y continue jusqu'à ce que les chaînes du polymère hautement ramifié contiennent en moyenne 5 chaînes du polymère précurseur.

9. Procédé de préparation d'un polymère hautement ramifié selon l'une quelconque des revendications 1 à 6, caractérisé en ce que l'on continue la réaction entre les groupes terminaux X et les motifs monomères Y jusqu'à ce que les chaînes du polymère hautement ramifié contiennent en moyenne 10 chaînes du polymère précurseur.
